# EUROPÄISCHE PATENTSCHRIFT

(11) **EP 3 172 451 B1**
(45) Veröffentlichungstag und Bekanntmachung des Hinweises auf die Patenterteilung: **19.05.2021**
(21) Anmeldenummer: 15744160.1
(22) Anmeldetag: 22.07.2015
(51) Int. Cl.: F16B 7/04

(54) **VERFAHREN ZUR HERSTELLUNG EINES PROFILSYSTEMS**
METHOD FOR PRODUCING A PROFILE SYSTEM
PROCÉDÉ DE FABRICATION D'UN SYSTÈME DE PROFILÉ

(30) Priorität: 23.07.2014 DE 102014214415; 29.10.2014 DE 102014222107
(43) Veröffentlichungstag der Anmeldung: 31.05.2017
(73) Patentinhaber: Adient Luxembourg Holding S.à r.l., 1855 Luxembourg (LU)
(72) Erfinder: ECKER, Roman, 67705 Trippstadt (DE); MOTSCH, Christian, 67659 Kaiserslautern (DE)
(74) Vertreter: Kutzenberger Wolff & Partner
(86) Internationale Anmeldenummer: PCT/EP2015/066768
(87) Internationale Veröffentlichungsnummer: WO 2016/012503

(56) Entgegenhaltungen:
- DE-A1-102011 000 450
- US-A1- 2010 011 697
- US-A1- 2012 247 059
- US-B1- 6 213 679

## Beschreibung

Die vorliegende Erfindung betrifft ein Verfahren zur Herstellung eines Profilsystems umfassend ein Verbindungselement zum Verbinden von Profilteilen, wobei das Verbindungselement wenigstens einen ersten Verbindungsbereich zum Verbinden mit einem ersten Profilteil und wenigstens einen zweiten Verbindungsbereich zum Verbinden mit einem zweiten Profilteil aufweist.

Derartige Verbindungselemente sind bereits aus dem Stand der Technik bekannt. So werden beispielsweise im Fahrzeugbau Lehnenrahmen aus mehreren Profilteilen zusammengesetzt. Um die einzelnen Profilteile zu verbinden, wird zwischen bzw. auf den Profilteilen ein Verbindungselement angeordnet und die Profilteile werden über das Verbindungselement in entsprechenden Verbindungsbereichen fest verbunden. Das derart hergestellte Profilsystem wird oftmals lackiert, um beispielsweise das Profilsystem farblich an seine Umgebung anzupassen.

Dabei ergibt sich das Problem, dass durch die großflächigen Verbindungsbereiche zwischen den Profilteilen untereinander und/oder zwischen den Profilteilen und dem Verbindungselement der Lack nicht, z. B. zwischen den Profilteilen, abfließen kann und sich daher oft Lackanhäufungen bilden, die nach dem Aushärten bei Belastung des Profilsystems Geräusche verursachen, das sogenannte Lackknarzen.

Die US 6,213,679 B1 zeigt ein winkelartiges Verbindungselement. Aus der DE 10 2011 000 450 A1 ist ein Verfahren zur Herstellung einer Trägerstruktur für ein Fahrzeug bekannt.

Es war daher die Aufgabe der vorliegenden Erfindung, ein Verfahren zur Herstellung eines Profilsystems zur Verfügung zu stellen, bei dem kein Knarzen, insbesondere kein Lackknarzen, auftritt.

Gelöst wird diese Aufgabe durch das Verfahren zur Herstellung eines Profilsystems gemäß Anspruch 1.

Das erste und das zweite Profilteil können aus einem beliebigen, dem Fachmann geläufigen, Werkstoff gefertigt sein. Insbesondere ist das erste und/oder das zweite Profilteil jedoch aus einem Metall, beispielsweise Stahl, und/ode einem Kunststoff, beispielsweise Polycarbonat (PC), gefertigt. Vorzugsweise werden beide Profilteile aus demselben Werkstoff gefertigt und weisen besonders bevorzugt dieselbe Wanddicke und/oder im Wesentlichen dieselbe Form auf. Besonders bevorzugt besteht das erste und/oder zweite Profilteil aus einem Leichtbauwerkstoff, beispielsweise einem faserverstärktem Kunststoff und/oder Aluminium. Vorzugsweise handelt es sich bei dem ersten Profilteil und dem zweiten Profilteil um Lehnenprofilteile, insbesondere für einen Fahrzeugsitz.

Das erste und/oder zweite Profilteil ist vorzugsweise extrudiert oder gepresst oder hergestellt, indem ein ebenes Blech zu einem geschlossenen Profil gebogen wird und die Enden, insbesondere durch Schweißen oder Kleben, vorzugsweise miteinander verbunden werden. Besonders bevorzugt ist das erste und/oder zweite Profilteil ein Hohlprofil. Ganz besonders bevorzugt ist das erste und/oder zweite Profilteil im Wesentlichen länglich erstreckt, insbesondere linear. Noch mehr bevorzugt weist das erste und/oder zweite Profilteil quer zu einer Haupterstreckungsrichtung einen eckigen oder wenigstens teilweise runden bzw. gerundeten, insbesondere einen rechteckigen, quadratischen und/oder kreisförmigen, Querschnitt auf. Vorzugsweise ist das erste und/oder das zweite Profilteil ein geschlossenes Profilteil.

Erfindungsgemäß weist das Verbindungselement nun ein Mittel zum Ableiten von einem fließfähigen, flüssigen Lack auf. Hierdurch ist es in vorteilhafter Weise möglich, dass der Lack, vordem vollständigen Aushärten ablaufen kann und somit Lackanhäufungen, die ein Lackknarzen verursachen, an und/oder zwischen den Profilteilen und/oder zwischen den Profilteilen und dem Verbindungselement vermieden werden.

Dabei soll unter flüssigem Lack insbesondere Lack verstanden werden, der wenigstens noch teilweise fließfähig, also noch nicht vollständig ausgehärtet ist.

Erfindungsgemäß ist das Mittel zum Ableiten von einem fließfähigen Medium eine Prägung, insbesondere eine Verprägung, die das Verbindungselement im montierten Zustand zumindest teilweise von dem Profilteil beabstandet. Der Fachmann versteht, dass eine Prägung insbesondere eine einstückig vorgesehene Ein- bzw. Ausbuchtung in dem Verbindungselement ist und dass eine Verprägung insbesondere eine stufenförmige, vorzugsweise flächige, Ein- bzw. Ausbuchtung ist. Beim Prägen wird ein ursprünglich planes Halbzeug in eine dreidimensionale Form gebracht. Beim Prägen wird die Materialstärke des Halbzeugs örtlich reduziert. Hierdurch wird es in besonders vorteilhafter Weise ermöglicht, dass das Verbindungselement nicht mehr großflächig an den Profilteilen anliegt und der Lack somit während des Lackierens und/oder unmittelbar danach zwischen den Profilteilen und/oder zwischen den Profilteilen und dem Verbindungselement, also insbesondere aus dem Übergangsbereich, ablaufen kann, wodurch es in der Folge nicht zu unerwünschter Geräuschentwicklung kommt. Ferner sind in vorteilhafter Weise bereits vorhandene Verbindungselemente in einfacher Weise durch das Einbringen einer Prägung in erfindungsgemäße Verbindungselemente umzuwandeln. Schließlich löst das erfindungsgemäße Verbindungselement in besonders kostengünstiger Weise das vorliegende Problem, insbesondere ohne zusätzliche Bauteile und/oder zusätzliche, zeitaufwändige Schritte, da das Einbringen der Prägung vorzugsweise in den Herstellungsprozess des Verbindungselements integrierbar ist.

Gemäß einer bevorzugten Ausführungsform ist das Verbindungselement ein Eckverbinder. Besonders bevorzugt ist das Verbindungselement in einem Endstückbereich des ersten und/oder zweiten Profilteils angeordnet. Ganz besonders bevorzugt ist das Verbindungselement derart zwischen dem ersten Profilteil und dem zweiten Profilteil angeordnet, dass diese einen Winkel von 90° einschließen.

Gemäß einer bevorzugten Ausführungsform ist das Mittel, besonders bevorzugt die Prägung, in einem mittigen Bereich des Verbindungselements vorgesehen. Der Fachmann versteht, dass in diesem Fall der erste und/oder zweite Verbindungsbereich insbesondere einem Randbereich des Verbindungselements entspricht. Hierdurch wird in vorteilhafter Weise ein umlaufender erster und/oder zweiter Verbindungsbereich ermöglicht, wodurch eine dauerhafte und stabile Verbindung mit dem ersten und/oder zweiten Profilteil möglich ist. Ganz besonders bevorzugt ist das Mittel nur in dem mittigen Bereich vorgesehen.

Gemäß einer bevorzugten Ausführungsform weist der erste Verbindungsbereich und/oder der zweite Verbindungsbereich eine Breite von 5 mm bis 10 mm, besonders bevorzugt eine Breite von 7 mm bis 8 mm, auf. Ganz besonders bevorzugt ist die Breite des ersten Verbindungsbereichs bzw. des zweiten Verbindungsbereichs im Wesentlichen gleichförmig vorgesehen. Hierdurch wird in vorteilhafter Weise ein erster und/oder zweiter Verbindungsbereich bereitgestellt, über den eine sichere und feste Verbindung des Verbindungselements mit den Profilteilen möglich ist. Der Fachmann versteht hierbei, dass die Breite des Verbindungsbereichs vorzugsweise einer Erstreckung parallel zu einer Haupterstreckungsebene des Verbindungselements und insbesondere von einem Mittelpunkt des Verbindungselements aus in im Wesentlichen radialer Richtung entspricht.

Gemäß einer bevorzugten Ausführungsform ist die Prägung im Wesentlichen in einem Übergangsbereich zwischen dem ersten Profilteil und dem zweiten Profilteil angeordnet. Hierdurch wird vorteilhafterweise ein Abfließen des Lacks zwischen den Profilteilen ermöglicht. Ganz besonders bevorzugt ist die Prägung derart vorgesehen, dass wenigstens in dem Übergangsbeeich ein Hohlraum zwischen dem Verbindungselement und dem ersten und/oder zweiten Profilteil bereitgestellt ist.

Gemäß einer bevorzugten Ausführungsform sind das erste Profilteil und das zweite Profilteil aneinander angrenzend angeordnet, insbesondere derart, dass sich das erste Profilteil und das zweite Profilteil in einem Kontaktbereich berühren. Besonders bevorzugt ist der Kontaktbereich flächig und/oder einstückig vorgesehen. Der Fachmann versteht, dass der Kontaktbereich von der Geometrie und der Anordnung der Profilteile abhängig ist.

Gemäß einer bevorzugten Ausführungsform weist der erste Verbindungsbereich und/oder der zweite Verbindungsbereich im Übergangsbereich eine geringere Erstreckung auf als in einem von dem Übergangsbereich entfernten Bereich des Verbindungselements. Hierdurch ist es in besonders vorteilhafter Weise möglich, dass in dem Übergangsbereich möglichst viel Raum für das Mittel zur Verfügung steht, eventuell eindringender Lack also möglichst gut abfließen kann, während in den übrigen Bereichen eine stabile und feste Verbindung zwischen dem Verbindungselement und den Profilteilen möglich ist.

Gemäß einer bevorzugten Ausführungsform ist die Prägung derart vorgesehen, dass das Verbindungselement im Bereich der Prägung von dem ersten Profilelement und/oder dem zweiten Profilelement beabstandet ist, insbesondere im montierten Zustand. Darunter soll insbesondere verstanden werden, dass sich im Bereich der Prägung zwischen dem Verbindungselement und dem ersten und/oder zweiten Profilelement ein Hohlraum ergibt, in den der Lack während des Lackiervorgangs einfließen und/oder aus dem der Lack nach dem Lackiervorgang wieder abfließen kann, insbesondere durch einen Spalt bzw. eine Öffnung zwischen dem ersten und dem zweiten Profilteil.

Gemäß einer bevorzugten Ausführungsform beträgt die Tiefe der Prägung, insbesondere senkrecht zu der Haupterstreckungsebene der Prägung und/oder des Verbindungselements mindestens 0,3 mm, insbesondere mindestens 0,4 mm. Der Fachmann versteht, dass die Tiefe dabei im Wesentlichen durch die Verformbarkeit des Materials, aus dem das Verbindungselement hergestellt ist, und/oder von den Platzerfordernissen im montierten Zustand abhängig ist. Zumindest sollte die Prägung so tief sein, dass keine Kapillarwirkung auftritt.

Gemäß einer bevorzugten Ausführungsform weist die Prägung wenigstens eine Ausnehmung auf. Besonders bevorzugt ist eine Dimension der Ausnehmung parallel zu der Haupterstreckungsebene der Prägung bedeutend kleiner als eine Dimension der Prägung in der Haupterstreckungsebene. Ganz besonders bevorzugt weist die Prägung wenigstens eine Ausnehmung im Bereich des ersten Profilteils und/oder wenigstens eine Ausnehmung im Bereich des zweiten Profilteils auf. Noch mehr bevorzugt weist die Prägung wenigstens zwei Ausnehmungen auf, die an jeweils entgegengesetzten Enden der Prägung angeordnet sind. Hierdurch wird in besonders vorteilhafter Weise ein sicheres Ein- und/oder Ausfließen des Lacks ermöglicht.

Gemäß einer bevorzugten Ausführungsform ist das Verbindungselement im Wesentlichen dreiecksförmig ausgebildet.

Vorzugsweise ist das Verbindungselement im Wesentlichen flächig ausgebildet.

Gemäß einer bevorzugten Ausführungsform ist das Verbindungselement vollflächig gestaltet. Darunter soll insbesondere verstanden werden, dass das Verbindungselement keine Ausnehmungen, wie zum Beispiel Bohrungen, aufweist. Hierdurch wird vorteilhafterweise eine Materialschwächung des Verbindungselements vermieden. Alternativ dazu weist das Verbindungselement und/oder das Mittel wenigstens eine Ausnehmung auf. Besonders bevorzugt ist die Ausnehmung im Übergangsbereich angeordnet. Hierdurch wird es vorteilhafterweise ermöglicht, dass in den Übergangsbereich gelangter Lack durch die wenigstens eine Ausnehmung abfließen kann.

Gemäß einer weiteren bevorzugten Ausführungsform weist das Verbindungselement eine wenigstens teilweise umgebogene Kante auf. Hierdurch wird vorteilhafterweise eine besonders stabile Verbindung zwischen dem Verbindungselement und dem ersten Profilteil und/oder zwischen dem Verbindungselement und dem zweiten Profilteil ermöglicht.

Gemäß einer bevorzugten Ausführungsform ist die Prägung wenigstens ein Kanal. Besonders bevorzugt ist wenigstens ein Ende des Kanals in dem Übergangsbereich vorgesehen. Ganz besonders bevorzugt ist ein weiteres Ende des Kanals an dem Rand des Verbindungselements vorgesehen. Der Kanal ist insbesondere derart vorgesehen, dass das fließfähige Medium, insbesondere der Lack, aus dem Übergangsbereich nach außen, d. h. in den freien Raum jenseits des Verbindungselements und der Profilteile, abfließen kann. Der Fachmann versteht hierbei, dass ein Kanal insbesondere ein im Wesentlichen röhrenförmiger, d. h. längserstreckter, Durchgang ist. Der Kanal kann dabei einen beliebigen, beispielsweise einen runden, quadratischen, oder vieleckigen Querschnitt aufweisen. Der Kanal kann gerade oder gekrümmt verlaufen. Vorzugsweise weist der Kanal einen im Wesentlichen halbkreisförmigen Querschnitt auf. Vorzugsweise ist die Prägung als Kanal ausgebildet.

Gemäß einer bevorzugten Ausführungsform ist das Verbindungselement aus dem gleichen Material wie das erste Profilteil und/oder das zweite Profilteil hergestellt. Besonders bevorzugt ist das Verbindungselement aus einem Metall und/oder einem Kunststoff, beispielsweise aus Stahl und/oder PC, hergestellt. Ganz besonders bevorzugt ist das Verbindungselement aus einem Leichtbauwerkstoff, insbesondere aus Aluminium und/oder einem faserverstärkten Kunststoff, hergestellt. Als faserverstärkte Kunststoffe kommen insbesondere glasfaserverstärkter Kunststoff (GFK) und/oder kohlenstofffaserverstärkter Kunststoff (CFK) in Frage.

Der Gegenstand der vorliegenden Erfindung ist ein Verfahren zur Herstellung eines Profilsystems, wobei wenigstens ein erstes Profilteil in einem ersten Verbindungsbereich eines, insbesondere erfindungsgemäßen, Verbindungselements mit dem Verbindungselement verbunden wird und wobei wenigstens ein zweites Profilteil in einem zweiten Verbindungsbereich des Verbindungselements mit dem Verbindungselement verbunden wird und wobei das Profilsystem nach der Montage durch eine kathodische Tauchlackierung (KTL) lackiert wird.

Gemäß einer bevorzugten Ausführungsform erfolgt die Verbindung form-, kraft- und/oder stoffschlüssig, insbesondere durch Verschweißen und/oder Verkleben. Besonders bevorzugt erfolgt die Verbindung durch Laserschweißen und/oder Metallaktivgasschweißen (MAG-Schweißen). Ganz besonders bevorzugt erfolgt die Verbindung punktweise und/oder linienförmig, insbesondere wellenlinienförmig.

Gemäß einer bevorzugten Ausführungsform wird das erste Profilteil vor dem Verbinden form- und/oder kraftschlüssig an dem zweiten Profilteil angeordnet, insbesondere wird das erste Profilteil mit einem Ende wenigstens teilweise an einer Außenfläche des zweiten Profilteils angeordnet. Hierdurch wird in vorteilhafter Weise eine besonders stabile Verbindung zwischen dem ersten Profilteil und dem zweiten Profilteil bereitgestellt.

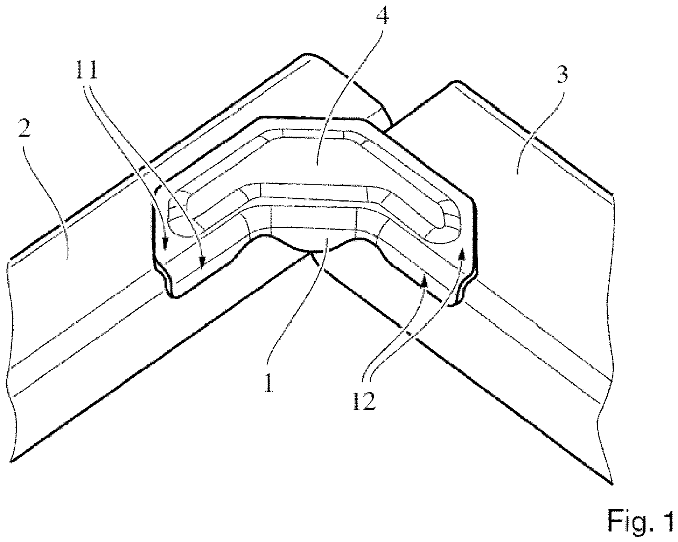

Im Folgenden wird die Erfindung anhand der Figur 1 erläutert. Diese Erläuterungen sind lediglich beispielhaft und schränken den allgemeinen Erfindungsgedanken nicht ein.
- **Figur 1**: zeigt eine Ausführungsform des erfindungsgemäßen Profilsystems in einer perspektivischen Ansicht.

In **Figur 1** ist eine Ausführungsform des erfindungsgemäßen Profilsystems in einer perspektivischen Ansicht dargestellt. Das Profilsystem umfasst ein erstes Profilteil 2 und ein zweites Profilteil 3, welche hier in einem jeweiligen Endbereich durch ein erfindungsgemäßes Verbindungselement 1 miteinander verbunden werden. Das erste Profilteil 2 und das zweite Profilteil 3 sind beispielsweise aus Aluminium, Stahl oder einem glasfaserverstärktem Kunststoff gefertigt.

Dabei weist das Verbindungselement 1 ein Mittel zum Ableiten von einem fließfähigen Medium auf. Das Mittel ist gemäß der dargestellten Ausführungsform eine Prägung 4, hier eine Verprägung, also eine insbesondere plateauförmige Ausbuchtung. Um die Prägung 4 herum sind ein erster Verbindungsbereich 11 und ein zweiter Verbindungsbereich 12 angeordnet, die hier einstückig und ineinander übergehend vorgesehen sind. Das erste Profilteil 2 ist in dem ersten Verbindungsbereich 11 und das zweite Profilteil 3 in dem zweiten Verbindungsbereich 12 mit dem Verbindungselement 1 verbunden.

Die Verbindung erfolgt beispielsweise über Verschweißen, insbesondere Laserschweißen und/oder MAG-Schweißen. Um eine möglichst stabile Verbindung zu erzielen, ist das Verbindungselement 1 vorzugsweise aus dem gleichen Material wie das erste Profilteil 2 und das zweite Profilteil 3 gefertigt.

Hier sind die Profilteile 2, 3 derart relativ zueinander angeordnet, dass sie einen Winkel von etwa 90° einschließen.

Wenn das Profilsystem lackiert wird, kann der Lack zwischen dem ersten und dem zweiten Profilteil 2, 3 dank der Prägung 4 abfließen und es bilden sich somit keine Lackansammlungen, die in der Folge zu unerwünschter Geräuschentwicklung, dem Lackknarzen, führen können.

### Bezugszeichenliste:

- 1: Verbindungselement
- 2: erstes Profilteil
- 3: zweites Profilteil
- 4: Prägung
- 11: erster Verbindungsbereich
- 12: zweiter Verbindungsbereich

## Patentansprüche

1. Verfahren zur Herstellung eines Profilsystems umfassend ein Verbindungselement (1) zum Verbinden von Profilteilen (2,3), wobei das Verbindungselement (1) wenigstens einen ersten Verbindungsbereich (11) zum Verbinden mit einem ersten Profilteil (2) und wenigstens einen zweiten Verbindungsbereich (12) zum Verbinden mit einem zweiten Profilteil (3) aufweist, wobei das Verbindungselement (1) ein Mittel zum Ableiten von flüssigem Lack aufweist, welches eine Prägung (4) ist, die das Verbindungselement (1) von dem jeweiligen Profilteil (2, 3) beabstandet, wobei wenigstens ein erstes Profilteil (2) in einem ersten Verbindungsbereich (11) des Verbindungselements (1) mit dem Verbindungselement (1) verbunden wird und wobei wenigstens ein zweites Profilteil (3) in einem zweiten Verbindungsbereich (12) des Verbindungselements (1) mit dem Verbindungselement (1) verbunden wird,
**dadurch gekennzeichnet, dass** das Profilsystem nach der Montage durch eine kathodische Tauchlackierung (KTL) lackiert wird.

2. Verfahren nach Anspruch 1, **dadurch gekennzeichnet, dass** das Verbindungselement (1) ein Eckverbinder ist.

3. Verfahren nach einem der vorhergehenden Ansprüche, **dadurch gekennzeichnet, dass** die Prägung (4) in einem mittigen Bereich des Verbindungselements (1) vorgesehen ist.

4. Verfahren nach einem der vorhergehenden Ansprüche, **dadurch gekennzeichnet, dass** die Prägung (4) im Wesentlichen in einem Übergangsbereich zwischen dem ersten Profilteil (2) und dem zweiten Profilteil (3) angeordnet ist, wobei die Prägung insbesondere derart vorgesehen ist, dass wenigstens in dem Übergangsbereich ein Hohlraum zwischen dem Verbindungselement (1) und dem ersten und/oder zweiten Profilteil (2, 3) bereitgestellt ist.

5. Verfahren nach einem der vorhergehenden Ansprüche, **dadurch gekennzeichnet, dass** die Prägung (4) wenigstens ein Kanal ist.

6. Verfahren nach Anspruch 5, **dadurch gekennzeichnet, dass** die Tiefe der Prägung (4), insbesondere senkrecht zu der Haupterstreckungsebene der Prägung (4) und/oder des Verbindungselements (1) mindestens 0,3 mm beträgt, insbesondere mindestens 0,4 mm.

## Claims

1. Method for producing a profile system comprising a connection element (1) for connecting profile parts (2, 3), wherein the connection element (1) has at least one first connection region (11) for connecting to a first profile part (2) and at least one second connection region (12) for connecting to a second profile part (3), wherein the connection element (1) has a means for conducting away liquid coating, said means being an embossed portion (4) which spaces the connection element (1) from the respective profile part (2, 3), wherein at least one first profile part (2) is connected in a first connection region (11) of the connection element (1) to the connection element (1) and wherein at least one second profile part (3) is connected in a second connection region (12) of the connection element (1) to the connection element (1),
**characterized in that** the profile system is coated after installation by means of cathodic dip coating (CDC).

2. Method according to Claim 1, **characterized in that** the connection element (1) is a corner connector.

3. Method according to either of the preceding claims, **characterized in that** the embossed portion (4) is provided in a central region of the connection element (1).

4. Method according to one of the preceding claims, **characterized in that** the embossed portion (4) is substantially arranged in a transition region between the first profile part (2) and the second profile part (3), wherein the embossed portion is provided in particular in such a manner that a cavity is provided between the connection element (1) and the first and/or second profile part (2, 3), at least in the transition region.

5. Method according to one of the preceding claims, **characterized in that** the embossed portion (4) is at least one channel.

6. Method according to Claim 5, **characterized in that** the depth of the embossed portion (4), in particular perpendicular to the main plane of extent of the embossed portion (4) and/or of the connection element (1), is at least 0.3 mm, in particular at least 0.4 mm.

## Revendications

1. Procédé de fabrication d'un système de profilés, comprenant un élément de raccordement (1) destiné à raccorder des parties de profilé (2, 3), l'élément de raccordement (1) présentant au moins une première zone de raccordement (11) destinée au raccordement à une première partie de profilé (2) et au moins une deuxième zone de raccordement (12) destinée au raccordement à une deuxième partie de profilé (3), l'élément de raccordement (1) présentant un moyen pour évacuer un vernis liquide qui est un estampage (4) qui écarte l'élément de raccordement (1) de la partie de profilé (2, 3) respective, au moins une première partie de profilé (2) dans une première zone de raccordement (11) de l'élément de raccordement (1) étant raccordée à l'élément de raccordement (1), et au moins une deuxième partie de profilé (3) dans une deuxième zone de raccordement (12) de l'élément de raccordement (1) étant raccordée à l'élément de raccordement (1),
**caractérisé en ce qu'**après le montage, le système de profilés est verni par un vernissage au trempé cathodique (KTL).

2. Procédé selon la revendication 1, **caractérisé en ce que** l'élément de raccordement (1) est un raccord d'angle.

3. Procédé selon l'une quelconque des revendications précédentes, **caractérisé en ce que** l'estampage (4) est prévu dans une zone centrale de l'élément de raccordement (1).

4. Procédé selon l'une quelconque des revendications précédentes, **caractérisé en ce que** l'estampage (4) est disposé substantiellement dans une zone de transition entre la première partie de profilé (2) et la deuxième partie de profilé (3), l'estampage étant prévu en particulier de telle sorte qu'au moins dans la zone de transition une cavité est prévue entre l'élément de raccordement (1) et la première et/ou la deuxième partie de profilé (2, 3).

5. Procédé selon l'une quelconque des revendications précédentes, **caractérisé en ce que** l'estampage (4) est au moins un canal.

6. Procédé selon la revendication 5, **caractérisé en ce que** la profondeur de l'estampage (4), en particulier perpendiculairement au plan d'extension principal de l'estampage (4) et/ou de l'élément de raccordement (1) mesure au moins 0,3 mm, en particulier au moins 0,4 mm.
